# EUROPEAN PATENT APPLICATION

(11) **EP 4 621 540 A1**
(43) Date of publication of application: **24.09.2025**
(21) Application number: 23890549.1
(22) Date of filing: 30.10.2023
(51) Int. Cl.: G06F 3/04845, G06F 3/04842, G06F 3/04883, G06F 9/451

(54) **SCREEN CAPTURE METHOD, SCREEN CAPTURE APPARATUS, ELECTRONIC DEVICE, AND READABLE STORAGE MEDIUM**

(30) Priority: 16.11.2022 CN 202211434791
(71) Applicant: Vivo Mobile Communication Co., Ltd., Dongguan, Guangdong 523863 (CN)
(72) Inventor: XIAO, Jiali, Dongguan, Guangdong 523863 (CN)
(74) Representative: Lavoix
(86) International application number: PCT/CN2023/127865
(87) International publication number: WO 2024/104113

(57) **Abstract**

This application discloses a screenshot method, a screenshot apparatus, an electronic device, and a readable storage medium, and pertains to the field of human-computer interaction technologies. The screenshot method includes: receiving a screenshot input of a user; responding to the screenshot input; and displaying a first screenshot in a case that interface content of a screen interface does not change within preset duration before the screenshot input is received; or displaying the first screenshot and at least one second screenshot in a case that the interface content of the screen interface changes within the preset duration before the screenshot input is received, where the first screenshot is an image obtained by taking a screenshot of the screen interface when the screenshot input is received, and the at least one second screenshot is an image captured on the screen interface before interface content changes each time.

## Description

### CROSS-REFERENCE TO RELATED APPLICATIONS

This application claims priority to Chinese Patent Application No. 202211434791.X, filed with the China National Intellectual Property Administration on November 16, 2022 and entitled "SCREENSHOT METHOD, SCREENSHOT APPARATUS, ELECTRONIC DEVICE, AND READABLE STORAGE MEDIUM", which is incorporated herein by reference in its entirety.

### TECHNICAL FIELD

This application pertains to the field of human-computer interaction technologies, and specifically relates to a screenshot method, a screenshot apparatus, an electronic device, and a readable storage medium.

### BACKGROUND

To help a user save an image displayed on a terminal device, a screenshot function emerges. The user may trigger the screenshot function by using a physical key, a specific gesture, or the like.

When the user triggers the screenshot function, a final screenshot result may be inconsistent with a screenshot target due to an improper operation. For example, when the user takes a screenshot by using a three-finger downward sliding operation, one finger may first touch a screen, then, two other fingers touch the screen, and the three fingers downward slide simultaneously. However, the previous one-finger touch operation may trigger another function, causing interface content to change. While the interface content changes, a screenshot operation is performed, and consequently a captured image is not an image desired by the user. In addition, in a screenshot process, the terminal device may receive and display some notification messages, which also causes the interface content to change. Consequently, a captured image is not an image desired by the user.

In the foregoing cases, the user usually chooses to take a screenshot again. Consequently, operations are cumbersome, and screenshot efficiency is low.

### SUMMARY

An objective of the embodiments of this application is to provide a screenshot method, a screenshot apparatus, an electronic device, and a readable storage medium, which can resolve a problem of low screenshot efficiency in the prior art.

According to a first aspect, an embodiment of this application provides a screenshot method, and the method includes:
receiving a screenshot input of a user; and
responding to the screenshot input; and displaying a first screenshot in a case that interface content of a screen interface does not change within preset duration before the screenshot input is received; or
displaying the first screenshot and at least one second screenshot in a case that the interface content of the screen interface changes within the preset duration before the screenshot input is received, where
the first screenshot is an image obtained by taking a screenshot of the screen interface when the screenshot input is received, and the at least one second screenshot is an image captured on the screen interface before interface content changes each time.

According to a second aspect, an embodiment of this application provides a screenshot apparatus, and the apparatus includes:
a first receiving module, configured to receive a screenshot input of a user;
a first display module, configured to: respond to the screenshot input; and display a first screenshot in a case that interface content of a screen interface does not change within preset duration before the screenshot input is received; and
a second display module, configured to display the first screenshot and at least one second screenshot in a case that the interface content of the screen interface changes within the preset duration before the screenshot input is received, where
the first screenshot is an image obtained by taking a screenshot of the screen interface when the screenshot input is received, and the at least one second screenshot is an image captured on the screen interface before interface content changes each time.

According to a third aspect, an embodiment of this application provides an electronic device, where the electronic device includes a processor and a memory, the memory stores a program or instructions capable of running on the processor, and the program or the instructions are executed by the processor to implement the steps of the screenshot method in the first aspect.

According to a fourth aspect, an embodiment of this application provides a readable storage medium, where the readable storage medium stores a program or instructions, and the program or the instructions are executed by a processor to implement the steps of the screenshot method in the first aspect.

According to a fifth aspect, an embodiment of this application provides a chip, where the chip includes a processor and a communication interface, the communication interface is coupled to the processor, and the processor is configured to run a program or instructions to implement the screenshot method in the first aspect.

According to a sixth aspect, an embodiment of this application provides a computer program product, where the program product is stored in a storage medium, and the program product is executed by at least one processor to implement the screenshot method in the first aspect.

In the embodiments of this application, after the user triggers a screenshot function of the electronic device, the electronic device may first determine whether the interface content of the screen interface changes within preset duration before the screenshot function is triggered, and then output a screenshot result based on a determining result. Within the preset duration before the screenshot function is triggered, if the interface content of the screen interface does not change, it indicates that a screen interface displayed when the screenshot function is triggered is a target screenshot interface of the user, and a screenshot of the screen interface at this time may be taken, and is output and displayed as the screenshot result. Within the preset duration before the screenshot function is triggered, if the interface content of the screen interface changes, it indicates that the screen interface displayed when the screenshot function is triggered is possibly not the target screenshot interface of the user. In this case, a screenshot of the screen interface at this time may be taken, and a screenshot of the screen interface before the interface content changes may also be taken. A plurality of screenshots are output and displayed as the screenshot result. In this way, the user can select a desired screenshot based on an actual requirement, so that the user can obtain a desired screenshot result through one screenshot operation. This avoids performing a screenshot operation again in a case that a screenshot error occurs, thereby improving screenshot efficiency.

### BRIEF DESCRIPTION OF DRAWINGS

FIG. 1 is a schematic flowchart of a screenshot method according to an embodiment of this application;
FIG. 2 is a schematic diagram 1 of a time axis according to an embodiment of this application;
FIG. 3 is a schematic diagram 2 of a time axis according to an embodiment of this application;
FIG. 4 is a schematic diagram 3 of a time axis according to an embodiment of this application;
FIG. 5 is a schematic diagram 1 of a screenshot thumbnail according to an embodiment of this application;
FIG. 6 is a schematic diagram 2 of a screenshot thumbnail according to an embodiment of this application;
FIG. 7 is a schematic block diagram of a screenshot apparatus according to an embodiment of this application;
FIG. 8 is a schematic block diagram of an electronic device according to an embodiment of this application; and
FIG. 9 is a schematic diagram of a hardware structure of an electronic device according to an embodiment of this application.

### DESCRIPTION OF EMBODIMENTS

The technical solutions of the embodiments of this application are clearly described below with reference to the accompanying drawings in the embodiments of this application. Clearly, the described embodiments are some rather than all of the embodiments of this application. All other embodiments obtained by a person of ordinary skill in the art based on embodiments of this application shall fall within the protection scope of this application.

It should be noted that the terms "first", "second", and the like in the specification and claims of this application are intended to distinguish between similar objects but do not necessarily indicate a specific order or sequence. It should be understood that the terms used in such a way are interchangeable in proper circumstances, so that the embodiments of this application can be implemented in a sequence other than those shown or described herein. In addition, objects distinguished by "first", "second", and the like are usually of a same type, and a quantity of the objects is not limited. For example, the first object may be one or more. In addition, in the specification and claims, "and/or" represents at least one of connected objects, and the character "/" usually represents an "or" relationship between associated objects.

With reference to the accompanying drawings, the following describes in detail a screenshot method provided in embodiments of this application by using specific embodiments and application scenarios thereof.

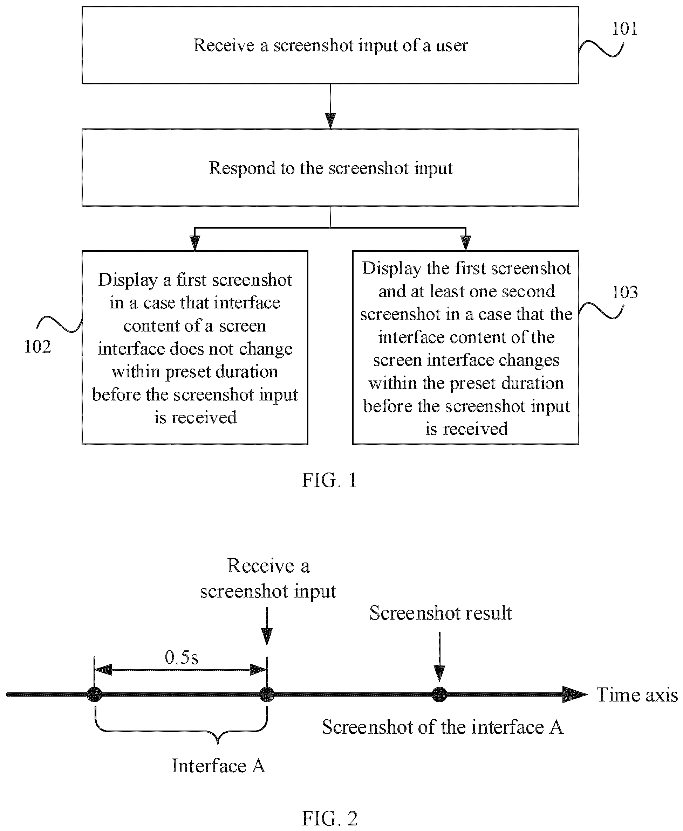

FIG. 1 is a schematic flowchart of a screenshot method according to an embodiment of this application. The screenshot method is applied to an electronic device, that is, steps of the screenshot method are performed by the electronic device.

The screenshot method may include the following steps.

Step 101: Receive a screenshot input of a user.

The screenshot input described herein may include at least one of the following: a screenshot input triggered by using a physical key, a screenshot input triggered by using a gesture, a screenshot input triggered by using a voice instruction, or the like.

Step 102: Display a first screenshot in a case that interface content of a screen interface does not change within preset duration before the screenshot input is received.

The first screenshot is an image obtained by taking a screenshot of the screen interface when the screenshot input is received. When receiving the screenshot input, the electronic device may take a screenshot of a current screen interface, to obtain the first screenshot.

In this embodiment of this application, after receiving the screenshot input, the electronic device may respond to a first input, determine whether the interface content of the screen interface changes within the preset duration before the screenshot input is received, and then output a screenshot result based on a determining result. The preset duration is relatively short duration, for example, duration greater than 0 seconds and less than 1 second. Optionally, the preset duration may be determined based on an empirical value, for example, 0.5s.

Within the preset duration before screenshot input is received, if the interface content of the screen interface does not change, it indicates that a screen interface displayed when the screenshot input is received is a target screenshot object of the user. In this case, a screenshot (namely, the first screenshot) of the screen interface at this time may be output and displayed as the screenshot result.

On a time axis shown in FIG. 2, it is assumed that the preset duration is 0.5s, a screen interface is always an interface A when the screenshot input is received and within 0.5s before the screenshot input is received. In this case, the screenshot result is a screenshot of the interface A.

Step 103: Display the first screenshot and at least one second screenshot in a case that the interface content of the screen interface changes within the preset duration before the screenshot input is received.

The second screenshot is an image captured on the screen interface before interface content changes each time.

Because the preset duration is relatively short, if the interface content of the screen interface changes within the preset duration, it may not be caused by an operation actively triggered by the user, but may be caused by a misoperation, the electronic device displaying a notification message, or another reason. Therefore, if the interface content of the screen interface changes within the preset duration before the screenshot input is received, it indicates that the screen interface displayed when the screenshot input is received is possibly not the target screenshot object of the user. In addition, considering that a change of the interface content is possibly intentionally triggered by the user, that is, is caused by an operation actively triggered by the user, in this case, a screenshot of the screen interface at this time can be taken, and a screenshot of the screen interface before the interface content changes can also be taken. Then, a plurality of screenshots are output and displayed as the screenshot result. In this way, the user can select a desired screenshot based on an actual requirement, so that the user can obtain a desired screenshot result through one screenshot operation. This avoids performing a screenshot operation again in a case that a screenshot error occurs, thereby improving screenshot efficiency.

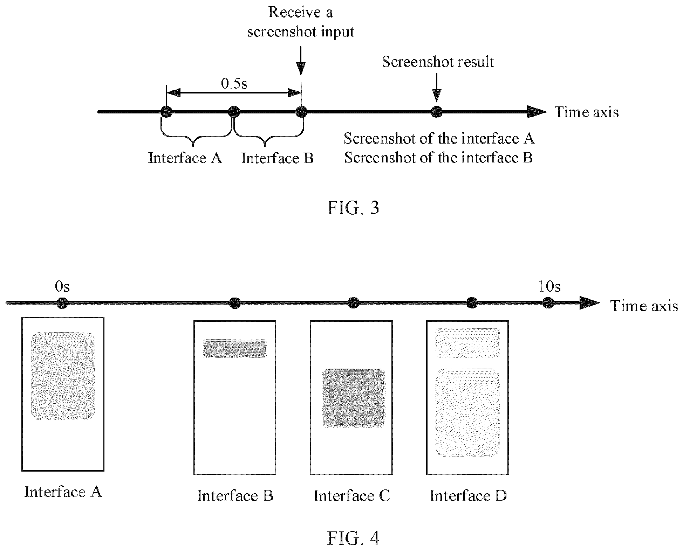

On a time axis shown in FIG. 3, it is assumed that the preset duration is 0.5s, and within 0.5s before the screenshot input is received, the interface content of the screen interface changes from the interface A to an interface B. In this case, the screenshot result may include a screenshot of the interface A and a screenshot of the interface B.

In this embodiment of this application, to enable the user to obtain a target screenshot, namely, the desired screenshot, the screenshot method different from a screenshot method in the prior art is provided. In comparison with the method in the prior art for taking a screenshot of only a screen interface displayed when a screenshot input is received, in this embodiment of this application, in a case that the screenshot input is received, different screenshot results can be provided based on whether the interface content of the screen interface changes within the preset duration before the screenshot input is received. Especially, in a case that the interface content changes, the screenshot result includes the screenshot of the screen interface when the screenshot input is received, and further includes the screenshot of the screen before the interface content changes. In this way, the screenshot desired by the user can be better included, to better meet a screenshot requirement of the user.

In an optional embodiment, the "displaying the first screenshot and at least one second screenshot" in step 103 may include the following steps.

Step A1: Obtain a correlation between the first input of the user and the screenshot input in a case that an interface content change is triggered by the first input.

Within the preset duration before the screenshot input is received, if the interface content of the screen interface changes, in a case that this is caused by an input operation (corresponding to the first input) of the user, this input operation may be a misoperation or may be actively triggered by the user. In this case, to further improve determining accuracy, the correlation between the screenshot input and the input operation that causes the interface content to change may be determined.

The misoperation caused by performing the screenshot input usually has a relatively high correlation with the screenshot input. For example, the screenshot input is a three-finger sliding operation, and the first input is a tap operation or a single-finger sliding operation. Both tapping and sliding are actions in the three-finger sliding operation, and there is a relatively high correlation between the two. If the first input is a shake operation for the electronic device, because the shake operation is not an action in the three-finger sliding operation, a correlation between the two is low. It may be learned that a lower correlation between the first input and the screenshot input indicates a smaller possibility that the first input is a misoperation. On the contrary, a higher correlation between the first input and the screenshot input indicates a greater possibility that the first input is a misoperation.

A correlation between input operations may be determined based on input parameters corresponding to the input operations.

Optionally, a preset value described herein may be a value greater than 0 and less than 1, and may be specifically a value greater than 0.5.

Step A2: Display the first screenshot and the at least one second screenshot in a case that the correlation between the first input and the screenshot input is greater than the preset value.

In this embodiment of this application, in the case that the correlation between the first input and the screenshot input is greater than the preset value, it indicates that there is a relatively high correlation between the first input and the screenshot input. That is, the first input is more likely to be a misoperation, and in this case, the first screenshot and the at least one second screenshot are output and displayed as the screenshot result.

Optionally, after "obtaining a correlation between the first input and the screenshot input" in step A1, the screenshot method may further include: displaying the first screenshot in a case that the correlation between the first input and the screenshot input is less than the preset value.

In a case that the correlation between the first input and the screenshot input is less than the preset value, it indicates that the correlation between the first input and the screenshot input is relatively low, that is, the first operation is more likely to be actively triggered by the user instead of being a misoperation caused by performing the screenshot input. In this case, the first screenshot is output and displayed as the screenshot result.

It should be noted that, in a case that the correlation between the first input and the screenshot input is equal to the preset value, the first screenshot and the at least one second screenshot may be output and displayed as the screenshot result, or the first screenshot may be output and displayed as the screenshot result. This may be specifically selected based on an actual requirement.

In this embodiment of this application, within the preset duration before the screenshot input is received, if the interface content of the screen interface changes, in a case that the interface content change is triggered by the first input of the user, whether the first input is a misoperation may be further determined based on the correlation between the first input and the screenshot input. Then, the screenshot result is output based on a determining result, thereby improving accuracy of the screenshot result.

In an optional embodiment, the "displaying the first screenshot and at least one second screenshot" in step 103 may include:
displaying the first screenshot and the at least one second screenshot in a case that an interface content change is triggered by a system operation.

Within the preset duration before the screenshot input is received, if the interface content of the screen interface changes, in a case that the interface content change is triggered by the system operation, for example, within the preset duration before the screenshot input is received, if a system pushes a received notification message, the interface content changes, it indicates that the screen interface displayed when the screenshot input is received is not the target screenshot object of the user. In this case, the first screenshot and the at least one second screenshot may be output and displayed as the screenshot result. It can be understood that in this case, there is a relatively great probability that the first screenshot is not the target screenshot of the user, and therefore, only the at least one second screenshot can be output and displayed as the screenshot result.

In an optional embodiment, after the responding to the screenshot input, the screenshot method may further include the following steps.

Step B1: Determine, based on pre-recorded interface content change information, whether the interface content of the screen interface changes within the preset duration before the screenshot input is received.

The interface content change information described herein may include a time point at which interface content changes each time within a target recording period, and the target recording period includes the preset duration before the screenshot input is received.

In this embodiment of this application, the electronic device may monitor the screen interface in real time; in a case that it is determined that interface content changes, record the interface content change information, for example, the time point at which interface content changes each time; and may determine, based on the information, whether the interface content of the screen interface changes within the preset duration before the screenshot input is received.

To prevent excessive memory statuses from occupying system running resources, recorded information may be periodically cleared and reset in this embodiment of this application. Therefore, reserved recorded information is usually within one recording period. The target recording period described herein is a latest recording period. Specific duration of the recording period may be set based on an actual requirement, for example, 10 seconds.

Step B2: In a case that the recorded time point is within the preset duration before the screenshot input is received, determine that the interface content of the screen interface changes within the preset duration before the screenshot input is received.

Specifically, in a case that at least one time point recorded within the target recording period is within the preset duration before the screenshot input is received, it may be determined that the interface content of the screen interface changes within the preset duration before the screenshot input is received.

Step B3: In a case that the recorded time point is not within the preset duration before the screenshot input is received, determine that the interface content of the screen interface does not change within the preset duration before the screenshot input is received.

Specifically, in a case that none of time points recorded within the target recording period is within the preset duration before the screenshot input is received, it may be determined that the interface content of the screen interface does not change within the preset duration before the screenshot input is received.

In an optional embodiment, the interface content change information may further include target interface images, and the target interface images may include an interface image recorded at a start moment of the target recording period and an interface image obtained after interface content changes each time within the target recording period.

In this embodiment of this application, one frame of interface image may be recorded first at the beginning of each recording period, and then, each time interface content changes, a changed interface image is recorded. As shown in FIG. 4, within a recording period of 10s, an interface image of the interface A is recorded at a start moment (namely, a moment of 0s). Afterwards, three changes occur on the screen interface. A first change is from the interface A to the interface B, and then an interface image of the interface B is recorded. A second change is from the interface B to an interface C, and then an interface image of the interface C is recorded. A third change is from the interface C to an interface D, and then an interface image of the interface D is recorded.

Optionally, a recorded interface image may be a screenshot of the screen interface, or may be image information of the screen interface.

Optionally, before step 103, the screenshot method may further include:
obtaining, based on the target interface images, an interface image before interface content of the screen interface changes each time within the preset duration before the screenshot input is received; and obtaining the second screenshot based on the interface image obtained before the interface content changes each time.

In this embodiment of this application, the second screenshot can be obtained based on the target interface image in the interface content change information. In a case that the target interface image is a screenshot image, the second screenshot may be directly obtained from the target interface image. In a case that the target interface image is the image information of the screen interface, the second screenshot may be obtained based on the recorded image information.

The interface image obtained before the interface content changes each time is an interface image recorded after the interface content previously changes, that is, an interface image obtained after a previous change is an interface image obtained before a subsequent change. When there is no previous change, an interface image obtained before changing is an interface image recorded at a start moment of a recording period. That is, for a first change within the recording period, an image obtained after a previous change is the interface image recorded at the start moment of the recording period.

In an optional embodiment, the "displaying the first screenshot and at least one second screenshot" in step 103 may include: displaying second screenshots in a time sequence of interface content changes.

In this embodiment of this application, the second screenshots may be displayed in a sequence of interface content changes, to facilitate viewing and selecting by the user.

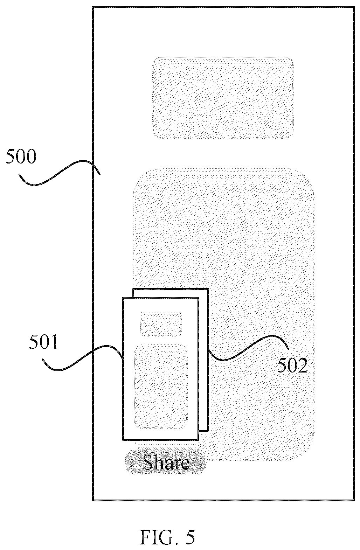

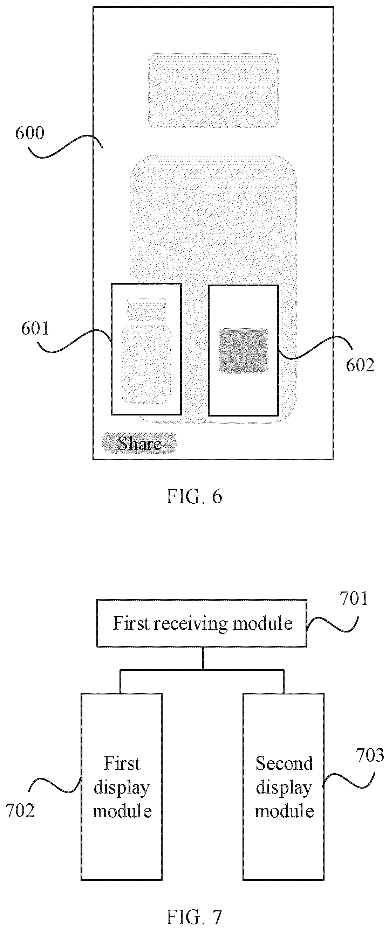

Optionally, the first screenshot and the second screenshot may be displayed in a form of a thumbnail. For example, as shown in FIG. 5, a screen interface 500 includes one first screenshot 501 and one second screenshot 502. The two screenshots are displayed in an overlapping manner, and an overlapping sequence is arranged in a time sequence, that is, a thumbnail of the first screenshot is arranged in a first position, and a thumbnail of the second screenshot is arranged in a second position. For another example, as shown in FIG. 6, on a screen interface 600, one first screenshot 601 and one second screenshot 602 each are displayed in full, and a display sequence is arranged in a time sequence.

Optionally, after step 103, the screenshot method may further include the following steps.

Step C1: Receive a second input, and display a screenshot editing interface in response to the second input.

The second input described herein is used to enter a screenshot editing mode. The second input may include but is not limited to at least one of a touch operation, an air gesture operation, a voice operation, or the like. Optionally, the second input may be a tap operation on any screenshot.

In the screenshot editing mode, editing processing may be performed on the screenshot, for example, cropping an image, adding text, and adding mosaics.

Step C2: Receive a third input for the target screenshot, and determine the target screenshot as an editing object in response to the third input.

The target screenshot is one of the first screenshot and the second screenshot.

The third input described herein is used to select a screenshot editing object. The third input may include but is not limited to at least one of a touch operation, an air gesture operation, a voice operation, and the like. Optionally, the third input may be a tap operation on the target screenshot.

In this embodiment of this application, when the screenshot result includes a plurality of screenshots, after the screenshot editing mode is entered, the user may select a desired screenshot in the plurality of screenshots based on a requirement for editing, to better meet a requirement of the user.

The foregoing describes the screenshot method provided in this embodiment of this application.

**In** conclusion, in this embodiment of this application, after the user triggers a screenshot function of the electronic device, the electronic device may first determine whether the interface content of the screen interface changes within preset duration before the screenshot function is triggered, and then output a screenshot result based on a determining result. Within the preset duration before the screenshot function is triggered, if the interface content of the screen interface changes, a screenshot of the screen interface when the screenshot function is triggered is taken, and a screenshot of the screen interface before the interface content changes is also taken. A plurality of screenshots are output and displayed as the screenshot result. In this way, the user can select a desired screenshot based on an actual requirement, so that the user can obtain a desired screenshot result through one screenshot operation. This avoids performing a screenshot operation again in a case that a screenshot error occurs, thereby improving screenshot efficiency.

The screenshot method provided in this embodiment of this application may be performed by a screenshot apparatus. In an embodiment of this application, that the screenshot apparatus performs the screenshot method is used as an example to describe the screenshot apparatus provided in this embodiment of this application.

FIG. 7 is a schematic block diagram of a screenshot apparatus according to an embodiment of this application. The screenshot apparatus is applied to an electronic device.

As shown in FIG. 7, the screenshot apparatus may include:
a first receiving module 701, configured to receive a screenshot input of a user;
a first display module 702, configured to: respond to the screenshot input; and display a first screenshot in a case that interface content of a screen interface does not change within preset duration before the screenshot input is received; and
a second display module 703, configured to display the first screenshot and at least one second screenshot in a case that the interface content of the screen interface changes within the preset duration before the screenshot input is received, where
the first screenshot is an image obtained by taking a screenshot of the screen interface when the screenshot input is received, and the at least one second screenshot is an image captured on the screen interface before interface content changes each time.

Optionally, the second display module 703 may include:
an obtaining unit, configured to obtain a correlation between a first input of the user and the screenshot input in a case that an interface content change is triggered by the first input; and
a display unit, configured to display the first screenshot and the at least one second screenshot in a case that the correlation is greater than a preset value.

Optionally, the second display module 703 may include:
a second display unit, configured to display the first screenshot and the at least one second screenshot in a case that an interface content change is triggered by a system operation.

Optionally, the apparatus may further include:
a first determining module, configured to determine, based on pre-recorded interface content change information, whether the interface content of the screen interface changes within the preset duration before the screenshot input is received, where
the interface content change information includes a time point at which interface content changes each time within a target recording period, and the target recording period includes the preset duration before the screenshot input is received;
a second determining module, configured to: in a case that the recorded time point is within the preset duration before the screenshot input is received, determine that the interface content of the screen interface changes within the preset duration before the screenshot input is received; and
a third determining module, configured to: in a case that the recorded time point is not within the preset duration before the screenshot input is received, determine that the interface content of the screen interface does not change within the preset duration before the screenshot input is received.

Optionally, the interface content change information further includes target interface images, and the target interface images include an interface image recorded at a start moment of the target recording period and an interface image obtained after interface content changes each time within the target recording period.

The apparatus may further include:
an obtaining module, configured to obtain, based on the target interface images, an interface image before interface content of the screen interface changes each time within the preset duration before the screenshot input is received; and
a generation module, configured to obtain the second screenshot based on the interface image obtained before the interface content changes each time.

In conclusion, in this embodiment of this application, after the user triggers a screenshot function of the electronic device, the electronic device may first determine whether the interface content of the screen interface changes within preset duration before the screenshot function is triggered, and then output a screenshot result based on a determining result. Within the preset duration before the screenshot function is triggered, if the interface content of the screen interface changes, a screenshot of the screen interface when the screenshot function is triggered is taken, and a screenshot of the screen interface before the interface content changes is also taken. A plurality of screenshots are output and displayed as the screenshot result. In this way, the user can select a desired screenshot based on an actual requirement, so that the user can obtain a desired screenshot result through one screenshot operation. This avoids performing a screenshot operation again in a case that a screenshot error occurs, thereby improving screenshot efficiency.

The screenshot apparatus in this embodiment of this application may be an electronic device, or may be a component in the electronic device, for example, an integrated circuit or a chip. The electronic device may be a terminal, or may be another device other than the terminal. For example, the electronic device may be a mobile phone, a tablet computer, a notebook computer, a palmtop computer, an in-vehicle electronic device, a mobile Internet device (Mobile Internet Device, MID), an augmented reality (Augmented Reality, AR)/virtual reality (Virtual Reality, VR) device, a robot, a wearable device, an ultra-mobile personal computer (Ultra-Mobile Personal Computer, UMPC), a netbook, or a personal digital assistant (Personal Digital Assistant, PDA), or may be a server, a network attached storage (Network Attached Storage, NAS), a personal computer (Personal Computer, PC), a television (Television, TV), a teller machine, or a self-service machine. This is not specifically limited in this embodiment of this application.

The screenshot apparatus in this embodiment of this application may be an apparatus with an operating system. The operating system may be an Android (Android) operating system, may be an iOS operating system, or may be another possible operating system. This is not specifically limited in this embodiment of this application.

The screenshot apparatus provided in this embodiment of this application can implement processes implemented in the screenshot method embodiment shown in FIG. 1. To avoid repetition, details are not described herein again.

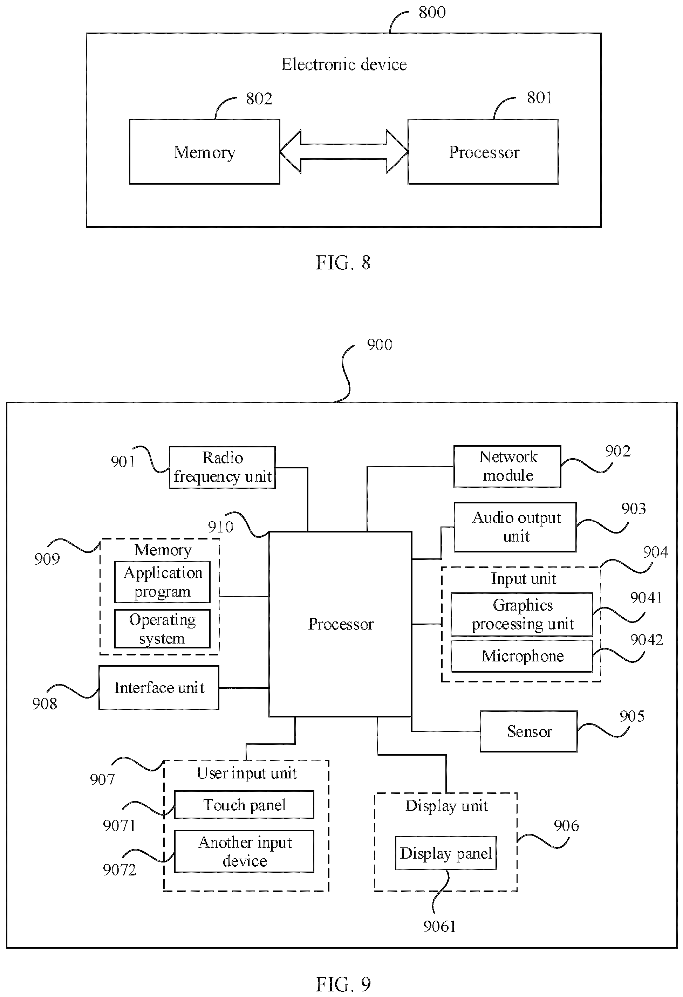

Optionally, as shown in FIG. 8, an embodiment of this application further provides an electronic device 800, including a processor 801 and a memory 802. The memory 802 stores a program or instructions capable of running on the processor 801. The program or the instructions are executed by the processor 801 to implement the steps in the screenshot method embodiment, and a same technical effect can be achieved. To avoid repetition, details are not described herein again.

It should be noted that the electronic device 800 in this embodiment of this application includes the foregoing mobile electronic device and a non-mobile electronic device.

FIG. 9 is a schematic diagram of a hardware structure of an electronic device according to an embodiment of this application.

The electronic device 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the electronic device 900 may further include a power supply (for example, a battery) that supplies power to each component. The power supply may be logically connected to the processor 910 by using a power supply management system, to implement functions such as charging management, discharging management, and power consumption management by using the power supply management system. A structure of the electronic device shown in FIG. 9 does not constitute a limitation on the electronic device. The electronic device may include more or fewer components than those shown in the figure, or combine some components, or have different component arrangements. Details are not described herein.

The processor 910 may be configured to: in a case that the user input unit 907 receives a screenshot input of a user, respond to the screenshot input; and control the display unit 906 to display a first screenshot in a case that interface content of a screen interface does not change within preset duration before the screenshot input is received; or control the display unit 906 to display the first screenshot and at least one second screenshot in a case that the interface content of the screen interface changes within the preset duration before the screenshot input is received, where the first screenshot is an image obtained by taking a screenshot of the screen interface when the screenshot input is received, and the at least one second screenshot is an image captured on the screen interface before interface content changes each time.

Optionally, the processor 910 may be further configured to: obtain a correlation between a first input of the user and the screenshot input in a case that an interface content change is triggered by the first input; and control the display unit 906 to display the first screenshot and the at least one second screenshot in a case that the correlation is greater than a preset value.

Optionally, the processor 910 may be further configured to control the display unit 906 to display the first screenshot and the at least one second screenshot in a case that an interface content change is triggered by a system operation.

Optionally, the processor 910 may be further configured to: determine, based on pre-recorded interface content change information, whether the interface content of the screen interface changes within the preset duration before the screenshot input is received, where the interface content change information includes a time point at which interface content changes each time within a target recording period, and the target recording period includes the preset duration before the screenshot input is received; in a case that the recorded time point is within the preset duration before the screenshot input is received, determine that the interface content of the screen interface changes within the preset duration before the screenshot input is received; and in a case that the recorded time point is not within the preset duration before the screenshot input is received, determine that the interface content of the screen interface does not change within the preset duration before the screenshot input is received.

Optionally, the interface content change information further includes target interface images, and the target interface images include an interface image recorded at a start moment of the target recording period and an interface image obtained after interface content changes each time within the target recording period. The processor 910 may be further configured to: obtain, based on the target interface images, an interface image before interface content of the screen interface changes each time within the preset duration before the screenshot input is received; and obtain the second screenshot based on the interface image obtained before the interface content changes each time.

In this embodiment of the present invention, after the user triggers a screenshot function of the electronic device, the electronic device may first determine whether the interface content of the screen interface changes within preset duration before the screenshot function is triggered, and then output a screenshot result based on a determining result. Within the preset duration before the screenshot function is triggered, if the interface content of the screen interface changes, a screenshot of the screen interface when the screenshot function is triggered is taken, and a screenshot of the screen interface before the interface content changes is also taken. A plurality of screenshots are output and displayed as the screenshot result. In this way, the user can select a desired screenshot based on an actual requirement, so that the user can obtain a desired screenshot result through one screenshot operation. This avoids performing a screenshot operation again in a case that a screenshot error occurs, thereby improving screenshot efficiency.

It should be understood that in this embodiment of this application, the input unit 904 may include a graphics processing unit (Graphics Processing Unit, GPU) 9041 and a microphone 9042. The graphics processing unit 9041 processes image data of a static picture or a video obtained by an image capture apparatus (for example, a camera) in a video capture mode or an image capture mode. The display unit 906 may include a display panel 9061, and the display panel 9061 may be configured in a form of a liquid crystal display, an organic light-emitting diode, or the like. The user input unit 907 includes at least one of a touch panel 9071 or another input device 9072. The touch panel 9071 is also referred to as a touchscreen. The touch panel 9071 may include two parts: a touch detection apparatus and a touch controller. The another input device 9072 may include but is not limited to a physical keyboard, a function key (for example, a volume control key or an on/off key), a trackball, a mouse, and a joystick. Details are not described herein.

The memory 909 may be configured to store a software program and various types of data. The memory 909 may mainly include a first storage area for storing a program or instructions and a second storage area for storing data. The first storage area may store an operating system, an application program or instructions required by at least one function (for example, a sound playback function or an image playback function), and the like. In addition, the memory 909 may include a volatile memory or a non-volatile memory, or the memory 909 may include both a volatile memory and a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 909 in this embodiment of this application includes but is not limited to these and any other suitable type of memory.

The processor 910 may include one or more processing units. Optionally, the processor 910 integrates an application processor and a modem processor, where the application processor mainly processes operations related to an operating system, a user interface, an application program, and the like, and the modem processor mainly processes a wireless communication signal, such as a baseband processor. It may be understood that the modem processor may not be integrated into the processor 910.

An embodiment of this application further provides a readable storage medium. The readable storage medium stores a program or instructions. The program or the instructions are executed by a processor to implement the processes in the screenshot method embodiment, and a same technical effect can be achieved. To avoid repetition, details are not described herein again.

The processor is a processor in the electronic device in the foregoing embodiment. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes in the screenshot method embodiment, and a same technical effect can be achieved. To avoid repetition, details are not described herein again.

An embodiment of this application provides a computer program product. The program product is stored in a storage medium. The program product is executed by at least one processor to implement the processes in the screenshot method embodiment, and a same technical effect can be achieved. To avoid repetition, details are not described herein again.

It should be understood that the chip mentioned in this embodiment of this application may also be referred to as a system-level chip, a system chip, a chip system, a system on chip, or the like.

It should be noted that, the terms "include", "comprise", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, elements defined by the sentence "including one" does not exclude that there are still other same elements in the process, method, article, or apparatus that includes the elements. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

Based on the descriptions in the foregoing implementations, a person skilled in the art may clearly learn that the method in the foregoing embodiment may be implemented by software in addition to a necessary universal hardware platform or by hardware. In most circumstances, the former is a better implementation. Based on such an understanding, the technical solutions of this application essentially, or the part contributing to the prior art, may be presented in the form of a computer software product. The computer software product is stored in a storage medium (for example, a ROM, a RAM, a magnetic disk, or an optical disc) including several instructions to enable a terminal (which may be a mobile phone, a computer, a server, a network device, or the like) to perform the methods described in the embodiments of this application.

The embodiments of this application are described with reference to the accompanying drawings. However, this application is not limited to the foregoing specific implementations. The foregoing specific implementations are merely examples, rather than restrictive. Many forms made by a person of ordinary skill in the art under inspiration of this application and without departing from the objectives and the protection scope of the claims of this application shall fall within the protection scope of this application.

## Claims

1. A screenshot method, wherein the method comprises:
receiving a screenshot input of a user; and
responding to the screenshot input; and displaying a first screenshot in a case that interface content of a screen interface does not change within preset duration before the screenshot input is received; or
displaying the first screenshot and at least one second screenshot in a case that the interface content of the screen interface changes within the preset duration before the screenshot input is received, wherein
the first screenshot is an image obtained by taking a screenshot of the screen interface when the screenshot input is received, and the at least one second screenshot is an image captured on the screen interface before interface content changes each time.

2. The screenshot method according to claim 1, wherein the displaying the first screenshot and at least one second screenshot comprises:
obtaining a correlation between a first input of the user and the screenshot input in a case that an interface content change is triggered by the first input; and
displaying the first screenshot and the at least one second screenshot in a case that the correlation is greater than a preset value.

3. The screenshot method according to claim 1, wherein the displaying the first screenshot and at least one second screenshot comprises:
displaying the first screenshot and the at least one second screenshot in a case that an interface content change is triggered by a system operation.

4. The screenshot method according to claim 1, wherein after the responding to the screenshot input, the method further comprises:
determining, based on pre-recorded interface content change information, whether the interface content of the screen interface changes within the preset duration before the screenshot input is received, wherein the interface content change information comprises a time point at which interface content changes each time within a target recording period, and the target recording period comprises the preset duration before the screenshot input is received; and
in a case that the recorded time point is within the preset duration before the screenshot input is received, determining that the interface content of the screen interface changes within the preset duration before the screenshot input is received; or
in a case that the recorded time point is not within the preset duration before the screenshot input is received, determining that the interface content of the screen interface does not change within the preset duration before the screenshot input is received.

5. The screenshot method according to claim 4, wherein the interface content change information further comprises target interface images, and the target interface images comprise an interface image recorded at a start moment of the target recording period and an interface image obtained after interface content changes each time within the target recording period; and
before the displaying the first screenshot and at least one second screenshot, the method further comprises:
obtaining, based on the target interface images, an interface image before interface content of the screen interface changes each time within the preset duration before the screenshot input is received; and
obtaining the second screenshot based on the interface image obtained before the interface content changes each time.

6. A screenshot apparatus, wherein the apparatus comprises:
a first receiving module, configured to receive a screenshot input of a user;
a first display module, configured to: respond to the screenshot input; and display a first screenshot in a case that interface content of a screen interface does not change within preset duration before the screenshot input is received; and
a second display module, configured to display the first screenshot and at least one second screenshot in a case that the interface content of the screen interface changes within the preset duration before the screenshot input is received, wherein
the first screenshot is an image obtained by taking a screenshot of the screen interface when the screenshot input is received, and the at least one second screenshot is an image captured on the screen interface before interface content changes each time.

7. The screenshot apparatus according to claim 6, wherein the second display module comprises:
an obtaining unit, configured to obtain a correlation between a first input of the user and the screenshot input in a case that an interface content change is triggered by the first input; and
a display unit, configured to display the first screenshot and the at least one second screenshot in a case that the correlation is greater than a preset value.

8. The screenshot apparatus according to claim 6, wherein the second display module comprises:
a second display unit, configured to display the first screenshot and the at least one second screenshot in a case that an interface content change is triggered by a system operation.

9. The screenshot apparatus according to claim 6, wherein the apparatus further comprises:
a first determining module, configured to determine, based on pre-recorded interface content change information, whether the interface content of the screen interface changes within the preset duration before the screenshot input is received, wherein the interface content change information comprises a time point at which interface content changes each time within a target recording period, and the target recording period comprises the preset duration before the screenshot input is received;
a second determining module, configured to: in a case that the recorded time point is within the preset duration before the screenshot input is received, determine that the interface content of the screen interface changes within the preset duration before the screenshot input is received; and
a third determining module, configured to: in a case that the recorded time point is not within the preset duration before the screenshot input is received, determine that the interface content of the screen interface does not change within the preset duration before the screenshot input is received.

10. The screenshot apparatus according to claim 9, wherein the interface content change information further comprises target interface images, and the target interface images comprise an interface image recorded at a start moment of the target recording period and an interface image obtained after interface content changes each time within the target recording period; and
the apparatus further comprises:
an obtaining module, configured to obtain, based on the target interface images, an interface image before interface content of the screen interface changes each time within the preset duration before the screenshot input is received; and
a generation module, configured to obtain the second screenshot based on the interface image obtained before the interface content changes each time.

11. An electronic device, comprising a processor and a memory, wherein the memory stores a program or instructions capable of running on the processor, and the program or the instructions are executed by the processor to implement the steps of the screenshot method according to any one of claims 1 to 5.

12. A readable storage medium, wherein a program or instructions are stored on the readable storage medium, and the program or the instructions are executed by a processor to implement the steps of the screenshot method according to any one of claims 1 to 5.

13. A chip, wherein the chip comprises a processor and a communication interface, the communication interface is coupled to the processor, and the processor is configured to run a program or instructions to implement the steps of the method according to any one of claims 1 to 5.

14. A computer program product, wherein the computer program product is executed by at least one processor to implement the steps of the method according to any one of claims 1 to 5.

15. An electronic device, wherein the electronic device is configured to perform the method according to any one of claims 1 to 5.
